# EUROPEAN PATENT APPLICATION

(11) **EP 1 033 572 A1**
(43) Date of publication of application: **06.09.2000**
(21) Application number: 99943401.2
(22) Date of filing: 17.09.1999
(51) Int. Cl.: G01N 30/08

(54) **COLUMN FOR CONCENTRATING COMPONENT IN SAMPLE**

(30) Priority: 18.09.1998 JP 26376398
(71) Applicant: Eisai Co., Ltd., Tokyo 112-8088 (JP)
(72) Inventor: MURATA, Kaoru, Tsukuba-shi, Ibaraki 305-0061 (JP); MANO, Nariyasu, Ryugasaki-shi, Ibaraki 301-0853 (JP); ASAKAWA, Naoki, Tsukuba-shi, Ibaraki 305-0044 (JP)
(74) Representative: HOFFMANN - EITLE
(86) International application number: JP9905090
(87) International publication number: WO0017633

(57) **Abstract**

A column for concentrating a component in a sample is used for high performance liquid chromatography and comprises a membrane for diffusing an object component and a membrane for absorbing an object component. The column is useful especially for microcolumn liquid chromatography.

## Description

### Field of the Invention

The present invention relates to a column for the concentration of components for use in a high performance liquid chromatography, to a high performance liquid chromatography system, and to a process for analyzing a trace component in a sample.

### Prior Art

High performance liquid chromatography has been widely used in analyses of trace components in samples. In recent years, such a high performance liquid chromatography has been used in combination with a mass spectrometer to constitute a system for the separation and identification of components in a sample with a high sensitivity. For example, JP-A 3-175355 discloses a process and apparatus for converting a mobile phase in a high performance liquid chromatographic mass spectrometry, and a device for trapping a target component in a sample into a trapping column.

The volume of a sample solution to be delivered to a mass spectrometer is at most several ten microliters, and therefore the flow rate of the sample solution in a high performance liquid chromatography in the high performance liquid chromatographic mass spectrometer must be equal to or less than a permissible flow rate in the mass spectrometer. As a trapping column for use in the conventional systems has a large dead volume, it takes a long time for a target component to reach the mass spectrometer when the flow rate of the sample solution is equal to or less than the permissive flow rate of the mass spectrometer, and the target component cannot be substantially analyzed. Such a trapping column is packed with a fine grain packing, and therefore the sample solution must be delivered into the trapping column under high pressures by action of a transfer pump.

### Brief Description of Drawings

Fig. 1 is a schematic diagram of a high performance liquid chromatography.
Fig. 2 is a schematic diagram of a high performance liquid chromatography.
Fig. 3 is a schematic diagram of a column for the concentration of components.
Fig. 4 is a chromatogram obtained by the invented high performance liquid chromatography.

### Disclosure of Invention

The present inventors made intensive investigations to solve problems which the conventional systems posses, and found that the problems can be solved by the following configurations. The present invention has been accomplished based on these findings.

Specifically, the invention provides a column for the concentration of components for use in a high performance liquid chromatography. The column includes a membrane for diffusing a target component and a membrane for adsorbing the target component. That is, the invention relates to a use of the column for the concentration of components for a high performance liquid chromatography.

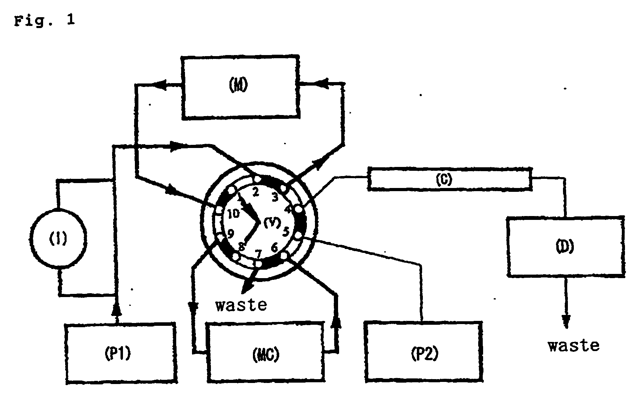

The present invention provides a high performance liquid chromatography comprising a line connecting a transfer pump (P1), an injector (I), a switching valve (V), a column (M) for the concentration of components composed of a diffusion membrane and an adsorption membrane, a switching valve (V), a solvent mixer (MC), and a switching valve (V) in this order, and another line connecting a transfer pump (P2), a switching valve (V), a separation column (C), and a detector (D), as shown in Fig. 1. The present invention also provides a process for analyzing a trace component in a sample in the above-mentioned high performance liquid chromatography, which comprises the steps of trapping a target component into the column (M) for the concentration of components composed of a diffusion membrane and an adsorption membrane by action of a mobile phase transferred by the transfer pump (P1), and switching the switching valve to yield a target component as an effluent by action of a mobile phase transferred by the transfer pump (P2).

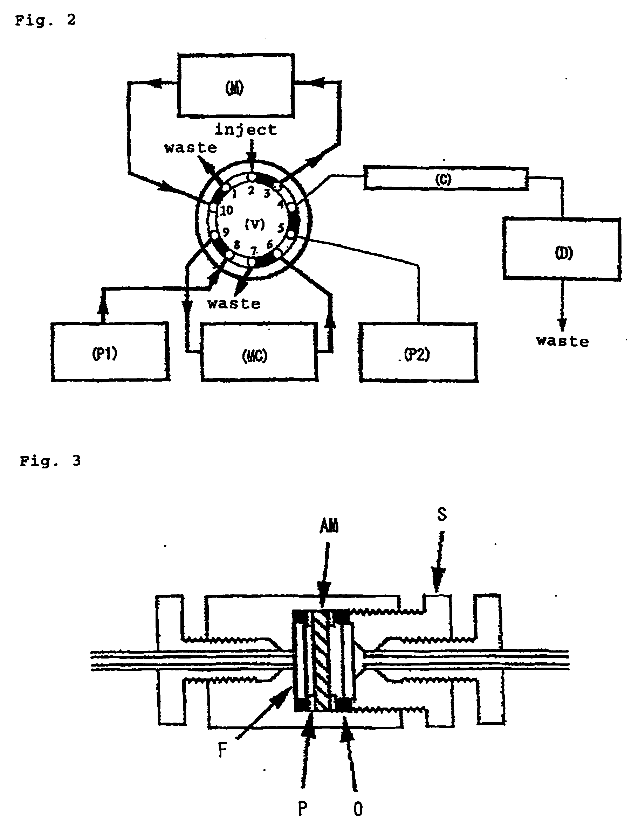

Further, the present invention provides a high performance liquid chromatography comprising a line connecting a transfer pump (P1), a switching valve (V), a solvent mixer (MC), and a switching valve (V) in this order, another line connecting a transfer pump (P2), a switching valve (V), a separation column (C), and a detector (D), and yet another line connecting a switching valve (V), a column (M) for the concentration of components composed of a diffusion membrane and an adsorption membrane, and a switching valve (V), as shown in Fig. 2. The present invention also provides a process for analyzing a trace component in a sample in the above-mentioned high performance liquid chromatography which comprises the steps of filling the solvent mixer (MC) with a solvent through the transfer pump (P1) in advance, injecting a target component into the column (M) for the concentration of components which is composed of a diffusion membrane and an adsorption membrane, and switching the switching valve to yield the target component as an effluent by action of a mobile phase transferred by the pump (P2).

The membrane for diffusing a target component for use in the invention includes membranes made of a sintered filter, a polymer, a ceramic, a metallic mesh or a cellulosic fiber and allows a mobile phase and the target component to migrate across the membrane to thereby diffuse throughout the membrane. The membrane for adsorbing a target component includes membranes containing a styrenic resin, a silica gel, an ion exchange resin or a substance obtained by chemically modifying any of these substances. The term "chemically modify" used herein means to allow a chemical compound to be bonded with surfaces of these substances to change the properties of the surfaces. Such chemical modifications include binding of, for example, an alkyl group or phenyl group to a hydrophilic silanol group on the surface of a silica gel to thereby modify the surface of the silica gel into being hydrophobic, or the introduction of an ion exchange group (e.g., sulfonic group, carboxyl group, or amino group) into a silica gel to thereby allowing the silica gel to have ion exchange property. The adsorption of the target component by the membrane depends on the properties of the membrane and the composition of a mobile phase of the high performance liquid chromatography. Specifically, the target component can be adsorbed by, or eliminated from, the adsorption membrane by changing the composition of the mobile phase. The term "concentration" used in the invention has substantially the same meaning as the term "adsorption". That is, the target component in the sample is adsorbed by the adsorption membrane and is concentrated on the adsorption membrane from a sample solution or a mobile phase solution.

The diffusion membrane and the adsorption membrane according to the present invention generally have a diameter of 2 to 30 mm. The diffusion membrane usually has a thickness of 0.2 to 3 mm, while the thickness depends on the material of the diffusion membrane. The adsorption membrane usually has a thickness of 0.2 to 2 mm, while the thickness depends on the material of the adsorption membrane.

The diffusion membrane and the adsorption membrane may be adjacent to, or away from, each other. The distance between the both membranes is preferably 1 mm or less, as a turbulent flow occurs to deteriorate a precision in the analysis when the distance is excessively large. In the present invention, the diffusion membrane may be placed on the both sides of the adsorption membrane. By this configuration, components in a sample can be diffused and reach the adsorption membrane even if the mobile phase is passed from either side of the column, and the resulting system can be easily set up as the column can be connected to another unit in either direction in the system.

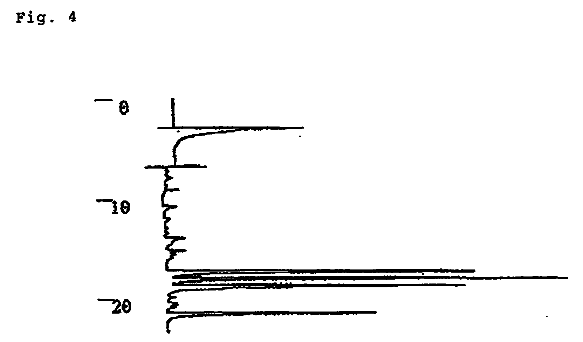

The diffusion membrane and the adsorption membrane for use in the invention are mounted in a housing. The material of the housing is usually, but is not limited to, a stainless steel. The membranes should be preferably mounted in the housing with O-rings in order to avoid the leakage of the mobile phase. The flow path of the mobile phase in the housing preferably becomes broad, like tapering, in a direction toward the diffusion membrane to facilitate the diffusion of the mobile phase in the diffusion membrane. Fig. 3 is a schematic diagram of the column for the concentration of components according to the present invention. As shown in the figure, a membrane for diffusing a target component, a membrane AM for adsorbing the target component, an O-ring O and a packing P are housed in a stainless steel housing S.

The column for the concentration of components according to the present invention can constitute a high performance liquid chromatography having the following configuration to thereby yield a system suitable for a high performance and high sensitivity analyses of trace components. The system will be illustrated in detail with reference to Fig. 1. Fig. 1 is a schematic diagram of a high performance liquid chromatography. The high performance liquid chromatography system includes a line connecting a transfer pump (P1), an injector (I), a switching valve (V), the column (M) for the concentration of components composed of a diffusion membrane and an adsorption membrane, a switching valve (V), a solvent mixer (MC), and a switching valve (V) in this order, and another line connecting a transfer pump (P2), a switching valve (V), a separation column (C), and a detector (D). Components are concentrated and separated in the high performance liquid chromatography system in the following manner.
(A) Initially, a mobile phase for the concentration with membrane is transferred from the transfer pump (P1), a sample solution is injected from the injector (I), and the sample solution is transferred into the membrane while diluting the sample solution with the mobile phase for the concentration with membrane to allow the membrane to trap a target component in the sample. Concurrently, the solvent mixer is filled with the mobile phase for the concentration with membrane. The mobile phase for the concentration with membrane is a mobile phase for allowing the adsorption membrane to adsorb the target component. This mobile phase is a solvent having a relatively large polarity such as a water/methanol mixture when the adsorption membrane is hydrophobic.
(B) Next, a mobile phase for the separation of a sample is delivered from the transfer pump (P2), and the valve (V) is switched to allow the mobile phase for the separation of a sample to be passed through the solvent mixer (MC), the unit (M) for the concentration with membrane, the separation column (C) and the detector (D), and is then wasted. The mobile phase for the separation of a sample is a mobile phase serving to eliminate components in a sample from the adsorption membrane and to separate the components in the sample in the separation column. This mobile phase is a solvent having a polarity lower than that of the mobile phase for the concentration with membrane such as a water/acetonitrile mixture when the adsorption membrane is hydrophobic. In this process, the mobile phase for the concentration with membrane and the mobile phase for the separation of a sample are mixed with each other in the solvent mixer (MC), and the resultant mixture is to have a gradient and is delivered to the unit for the concentration with membrane to allow the membrane to release the trapped target component in the sample. The released target component is separated in the separation column (C) and is detected by the detector (D). The mobile phase for the concentration with membrane flows in a direction opposite to that of the mobile phase for the separation of a sample. A gradient in the mixture of the mobile phase for the concentration with membrane and the mobile phase for the separation of a sample formed by the use of the solvent mixer (MC) can markedly improve a separative power for the target component in the separation column. This distinguishes the system of the present invention from conventional equivalents in an aspect.

The pump used herein is a transfer pump for use in a high performance liquid chromatography. The valves include, for example, ten-way valves, six-way valves and other valves for use in a high performance liquid chromatography. The injector is a unit serving to inject a sample solution in the high performance liquid chromatography. The separation column is a column serving to separate a target component in a sample and can be appropriately selected from a normal column, a reversed column, or another column according to the application. Commercially available units can be used as these units.

Another embodiment of the high performance liquid chromatography system according to the present invention will be illustrated with reference to Fig. 2. Fig. 2 is a schematic diagram of a high performance liquid chromatography. The high performance liquid chromatography includes a line connecting a transfer pump (P1), a switching valve (V), a solvent mixer (MC), and a switching valve (V) in this order, another line connecting a transfer pump (P2), a switching valve (V), a separation column (C), and a detector (D), and yet another line connecting a switching valve (V), the column (M) for the concentration of components composed of a diffusion membrane and an adsorption membrane, and a switching valve (V).

Components are concentrated and separated from each other according to the system shown in Fig. 2 in the following manner.
(A) Initially, a mobile phase 1 is delivered from the transfer pump (P1) and the mixing chamber (MC) is filled with the mobile phase 1. The column for the concentration of components according to the present invention is mounted on a ten-way valve, and a sample solution is injected from an injection port of the ten-way valve to allow the above-mentioned column for the concentration of components to trap a target component in the sample. The column is then washed with an appropriate solvent in such a manner as to avoid the elimination of the target component from the membrane.
(B) Next, the valve (V) is switched to allow a mobile phase for the separation of a sample to move from the pump (P2) through the solvent mixer (MC), the column for the concentration of components, and the separation column (C) into the detector (D). In this procedure, the mobile phase 1 and the mobile phase for the separation of a sample are mixed with each other in the mixing chamber, and the resulting mixture is to have a gradient and is delivered to the column for the concentration of components. The delivered mixture allows the column to release the trapped target component in the sample, and the released target component in the mixture is separated in the separation column (C). The mobile phase for the separation of a sample flows through the column for the concentration of components in a direction opposite to the direction in which the sample solution is injected. The solvent mixer plays the above-mentioned role which is a character of the present invention. In addition, the sample solution can be manually injected into the column for the concentration of components in the system shown in Fig. 2. This is a marked advantage that can be achieved by the column for the concentration of components according to the present invention which is free from pressures when the mobile phase, sample solution, and other ingredients pass through the column. The advantage allows a large-scale treatment of a sample solution and a high performance concentration of components.

The column for the concentration of components according to the present invention has a small dead volume and is typically suitable for liquid microchromatography. Specifically, the column for the concentration of components according to the present invention allows the concentration and separation of components in a sample even at a markedly lower flow rate (several ten microliters per minute) of a mobile phase than that (several milliliters per minute) employed in conventional high performance liquid chromatography. The column for the concentration of components according to the present invention can be directly connected to a mass spectrometer. The markedly low pressure applied on the column by the passage of the mobile phase and/or sample solution allows a high performance concentration and a manual injection of the sample solution.

Furthermore, the high performance liquid chromatography system including the column of the present invention for the concentration of components can very easily concentrate and separate the target component in the sample solution.

Fig. 4 shows a chromatogram obtained by the system according to the present invention illustrated in Fig. 2. This chromatogram cannot be significantly obtained by any conventional high performance liquid chromatography and shows remarkable effect of the present invention.

The chromatogram shown in Fig. 4 was obtained under the following condition for analysis. (CHROMATOPAC C-R4A CH=1 REPORT No.=12 chromatograph = 1:MICRO.C00)
Detector: Ultraviolet ray absorptiometer (measuring
wavelength: 254 nm)
Separation column: Inertsil ODS-2 (0.7 mm I.D. x 150 mm)
Mobile phase for the concentration with membrane: 0.1% Ammonium acetate aqueous solution
Mobile phase for the separation of a sample: A mixture of 0.1% ammonium acetate-containing acetonitrile and ethanol (500:500)
Flow rate: For concentration with membrane: 1.0 ml/min
   For separation of a sample: 0.025 ml/min

As components in a sample, each 10 µg/ml of n-propyl benzoate, benzyl benzoate, n-butyl benzoate, and n-hexyl benzoate were dissolved in a 10% aqueous solution of acetonitrile. The sample was injected in a volume of 10 µL.

## Claims

1. A column for the concentration of components for use in a high performance liquid chromatography, comprising a membrane for diffusing a target component and a membrane for adsorbing the target component.

2. The column as claimed in Claim 1, wherein the membrane for diffusing the target component is arranged on one side of, or both sides of, the membrane for adsorbing the target component.

3. The column as claimed in Claim 1 or 2, wherein the membrane for diffusing the target component is made of a sintered filter, a ceramic, a metallic mesh, or a cellulosic fiber.

4. The column as claimed in Claim 1 or 2, wherein the membrane for adsorbing the target component is a membrane containing a styrene resin, a silica gel, an ion exchange resin, or a substance prepared by chemically modifying any of these substances.

5. A high performance liquid chromatograph comprising a line connecting a transfer pump (P1), an injector (I), a switching valve (V), the column (M) for the concentration of components as claimed in Claim 1 or 2, a switching valve (V), a solvent mixer (MC), and a switching valve (V) in this order, and another line connecting a transfer pump (P2), a switching valve (V), a separation column (C) and a detector (D).

6. A high performance liquid chromatograph comprising a line connecting a transfer pump (P1), a switching valve (V, a solvent mixer (MC), and a switching valve (V) in this order, another line connecting a transfer pump (P2), a switching valve (V), a separation column (C), and a detector (D), and yet another line connecting a switching valve (V), the column (M) for the concentration of components as claimed in Claim 1 or 2, and a switching valve (V).

7. A process for analyzing a trace component in a sample in the high performance liquid chromatography as claimed in Claim 5, which comprises the steps of trapping a target component into the column (M) for the concentration of components as claimed in Claim 1 or 2 by action of a mobile phase being transferred by the transfer pump (P1), and switching the switching valve to yield a target component as an effluent by action of a mobile phase being transferred by the transfer pump (P2).

8. A process for analyzing a trace component in a sample in the high performance liquid chromatography as claimed in Claim 6, which comprises the steps of filling the solvent mixer (MC) with a solvent through the transfer pump (P1) in advance, injecting a target component into the column (M) for the concentration of components as claimed in Claim 1 or 2, and switching the switching valve to yield the target component as an effluent by action of a mobile phase being transferred by the pump (P2).
